Europäisches Patentamt

European Patent Office

Office européen des brevets

(19)

(11) Veröffentlichungsnummer : **0 048 452**
**B1**

# EUROPÄISCHE PATENTSCHRIFT

(12)

(45) Veröffentlichungstag der Patentschrift :
09.01.85

(21) Anmeldenummer : 81107361.8

(22) Anmeldetag : 17.09.81

(51) Int. Cl.⁴ : **G 01 N 35/00**, G 01 N 1/00,
**B 01 L 11/00**

(54) Verfahren zur Verteilung von Proben aus Primärgefässen.

(30) Priorität : 19.09.80 DE 3035340

(43) Veröffentlichungstag der Anmeldung :
31.03.82 Patentblatt 82/13

(45) Bekanntmachung des Hinweises auf die Patenterteilung : 09.01.85 Patentblatt 85/02

(84) Benannte Vertragsstaaten :
AT BE CH DE FR GB IT LI LU NL SE

(56) Entgegenhaltungen :
DE-A- 2 217 669
DE-A- 2 841 086
FR-A- 2 132 343
US-A- 4 262 711

(73) Patentinhaber : BOEHRINGER INGELHEIM DIAGNOSTIKA GMBH
Gutenbergstrasse 3 Postfach 1609
D-8046 Garching bei München (DE)

(72) Erfinder : Assmann, Gerd, Prof. Dr. med.
Westring 3
D-4400 Münster/Westfalen (DE)
Erfinder : Helb, Horst-Dietrich, Dr. rer. nat.
Wollinstrasse 44
D-4400 Münster/Westfalen (DE)

(74) Vertreter : Laudien, Dieter et al
Boehringer Ingelheim International GmbH ZA Patente
Postfach 200
D-6507 Ingelheim am Rhein- (DE)

**Beschreibung**

Die Erfindung betrifft ein Verfahren und Vorrichtungen zur Verteilung von Probengut aus Primärgefäßen, insbesondere von Patientenseren, flüssigen Reagenzien oder dergleichen in beliebig ausgebildete, fest angeordnete Sekundärgefäße, vorzugsweise entsprechend den durch eine Steuerprogrammiervorrichtung aufgenommenen Aufzeichnungen der Daten eines Verteilerblattes, bei dem die Sekundärgefäße über einen in der x-y-Ebene durch zwei Schrittmotore bewegbaren Transportwagen für die Primärgefäße, dem ein Diluter zugeordnet ist, nacheinander ansteuerbar sind und das Primärgefäß nach jeder Abgabe oder der Abgabe des für die gesamte Probenserie vorgesehenen Probenguts wieder in seine Ausgangsposition zurückgebracht wird.

Ein solches Verfahren wurde durch die Patentanmeldung DE-A-28 41 086 bekannt.

Das Kriterium dieses Verfahrens ist es, daß der Transportwagen mit einer absenk- und anhebbaren Pipette ausgerüstet ist, der jeweils oberhalb eines Primärgefäßes verbracht, die Pipette absenkt und die Probe durch einen dem Magazin stationär zugeordneten, mit der Pipette durch bewegliche Schlauchleitungen verbundenen Diluter absaugt und anschließend die Pipette wieder anhebt und in eine durch die Steuerprogrammierung vorbestimmte Abgabeposition oberhalb einer als Sekundärgefäß vorgesehenen Küvette einfährt und die Probe in das Sekundärgefäß ausstößt.

Eine Weiterbildung dieses Gegenstandes sieht vor, daß das Primärgefäß mit einem elektronischen Sensorkontakt ausgebildet und mit einem computerlesbaren Etikett versehen wird, und anschließend, nach labormäßiger Vorbereitung der Probe, die Etikettaussage durch einen manuell geführten Lesestift erfaßt und in den Rechner eingegeben wird. Das so etikettierte Gefäß kann in eine beliebige Entnahmeposition des Probenverteilers eingebracht werden, wobei die hierbei gewählte Position über den Sensorkontakt ebenfalls in den Rechner eingegeben wird. Parallel zur Kennzeichnung der Probe wird die Anforderungsmarkierungskarte, wie vorher durch Computer lesbar, ausgeschrieben und mit derselben Etikettmarkierung wie das Primärgefäß versehen und diese Karte in den mit dem Rechner verbundenen Kartenleser eingegeben. Die Probe des Primärgefäßes wird dann, entsprechend der Gefäßetikettierung und der Aussage der Anforderungsmarkierungskarte, aus dem Primärgefäß in Teilmengen zur Einzeluntersuchung in entsprechend der Wartenaussage zugeordnete Sekundärgefäße eingebracht (vgl. hierzu DE-A-28 41 086).

Desweiteren wird auf die Druckschrift « Labtronic, Klinische Labortechnik », der Firma Labtronic, verwiesen, deren Aussagen in ihrem Inhalt mit denen der genannten Anmeldung korrespondieren.

Die Druckschrift verweist insbesondere auf den « Serumverteiler mit Probenidentifizierung SV 500 », dessen Verarbeitungsleistung mehr als 1 000 Proben pro Stunde beträgt. Vorteile dieses Systems sind hinsichtlich seiner Sicherheit in der Probenvorbereitung und in der Probenidentifizierung sowie in seiner Leistung heute weitgehend bekannt. Nachteilig ist die insbesondere durch den Pipettierbetrieb gegebene Verschleppungsgefahr, wobei Probenreste nicht nur in den Pipetten selbst, sondern auch teilweise in dem zum Diluter führenden Verbindungsschlauch im wesentlichen in dem von der Pipette abgehenden Bereich anhaften können.

Selbst die Zwischenschaltung von Spül- bzw. Reinigungsphasen durch Entnahme entsprechender Mittel aus einem Primärgefäß und deren Abgabe in ein Sekundärgefäß — das anschließend ausgegossen wird — kann nicht die oft notwendige maximale Sicherheit garantieren.

Desweiteren verlangen die ausschließlich nach diesen Verfahren arbeitenden Systeme im Hinblick auf die die Position des Gefäßes im Probenverteiler im Rechner markierenden Sensorkontakte die Verwendung zwar unterschiedlich ausgebildeter, jedoch zumindest in einem Hauptmaß, einheitlicher Primärgefäße.

Dies ist zwar bei den teilweise geforderten hohen Leistungen des Probenverteilers grundsätzlich nicht zu umgehen. Umgekehrt erscheint es in vielen Fällen ebenfalls zweckmäßig, Primärprobegefäße unterschiedlicher Abmessungen zum Einsatz bringen zu können und damit eine weitgehende Probegefäßneutralität zu schaffen, wobei allerdings, dies sei nochmals erwähnt, dann keine starre Bindung an existente Verfahren und Systeme möglich ist.

Es ist ferner eine Anordnung zum Umfüllen einer Flüssigkeit von einem ersten zu einem zweiten Gefäß bekanntgeworden (DE-A-22 17 669), bei der eine druckdicht aufsteckbare Kappe das erste Gefäß verschließt. Durch diese Kappe führt ein Kanal, der beim druckdichten Aufsetzen des Dichtungskörpers auf die Kappe mit der Mündung einer Druckmittelleitung im Dichtungskörper verbunden ist. Eine ebenfalls mit dem Dichtungskörper verbundene Nadel dient zum Durchstechen der Kappe.

Die in der Patentschrift DE-A-22 17 669 beschriebene Erfindung hat mit der vorliegenden Erfindung das Probengefäßspezifische Verschlußstück mit Luftdurchtrittsöffnung gemeinsam. Das Verschlußstück des erwähnten Dokuments ist jedoch nicht mit einem Ausgußrüssel versehen, sondern der Ausgußrüssel ist fester Bestandteil des Verteilungsgerätes ; er wird durch das Verschlußstück gestochen und so in das Probengut eingebracht. Im Ausgußrüssel befindet sich ein großes Volumen an Probengut, das zur Kontamination des Probenverteilers beiträgt.

Außerdem ist das Luftsteigrohr in DE-A-

22 17 669 nicht Bestandteil des Probengefäß-spezifischen Verschlußstückes, sondern des Verteiler-zugehörigen Auflageteils. Das Verschlußstück enthält lediglich Lufteintrittsöffnungen, aber kein Luftsteigrohr.

Gemäß der Erfindung dagegen enthält das Probengefäß-spezifische Verschlußstück das Luftsteigrohr. Dies bewirkt, daß nach der Probengutabgabe der überhängende Tropfen zurückgezogen werden kann, ohne daß Kontamination mit den luftführenden Teilen des Zwischenträgerstücks bzw. mit der Luftzuführungsöffnung der Probenhalterung eintritt.

Ferner ist das Zwischenträgerteil im Dokument DE-A-22 17 669 ein ortsfester Bestandteil des Verteilergerätes, während das Zwischenträgerteil gemäß der Erfindung ein ortsungebundenes, frei bewegliches Hilfsmittel zum Einsetzen des Probengefäßes samt Verschlußstück in das Verteilergerät darstellt.

Es ist deshalb Aufgabe dieser Erfindung, ein Verfahren nach der eingangs beschriebenen Art zu nennen, das vollständig verschleppungsfrei arbeitet, und das primärseitig — bei Verzicht auf eine einheitliche Einstellung der Primärgefäße in dem Probenverteiler — die Verwendung von Gefäßen unterschiedlicher Abmessungen ermöglicht, das aber umgekehrt, bei Verwendung von Gefäßen gleicher Abmessungen eine Einordnung der Gefäße in die Probenverteiler der genannten Systeme zuläßt.

Darüberhinaus ist es Aufgabe, für die Durchführung des Verfahrens geeignete Vorrichtungen zu bestimmen.

Die erfindungsgemäße Lösung dieser Aufgabe sieht vor, daß die Primärgefäße jeweils bei nach oben weisender Öffnung mit einem der Öffnung des Primärgefäßes angepaßten, sonst jedoch einheitlich ausgebildeten Verschlußstück kraft- oder formschlüssig verbunden werden, wobei am Verschlußstück ein Ausgußrüssel angeordnet sowie eine in ein Steigrohr einmündende Luftdurchtrittsöffnung eingebracht ist ; daß anschließend das Verschlußstück in ein mit absperrbarer Luftzuführung ausgerüstetes Zwischenträgerteil, in abgesperrter Stellung der Luftzuführung durch die Luftdurchtrittsöffnung, eingebracht wird, daß in der Folge das mit dem Zwischenträgerstück versehene Primärgefäß mit seiner Öffnung senkrecht nach unten weisend gedreht in der Halterung des Transportwagens — bei damit verbundener selbsttätiger Öffnung der Luftzuführung durch die Luftdurchtrittsöffnung, durch den Zwischenträger — fixiert wird ; daß für die Abgabe des Probegutes durch den Diluter Luft in einer solchen Menge und mit solchen Druck über eine Leitung, einen Zwischenträger und das dem Verschlußstück verbundene Steigrohr in das Primärgefäß eingegeben wird, bis ein entsprechend vorbestimmtes Quantum des Probegutes aus diesem verdrängt ist ; daß mit Abgabe der voreingestellten Probemenge in ein Sekundärgefäß durch den Diluter aus dem Primärgefäß Luft insoweit evakuiert wird, bis die Oberflächenspannung des Probegutes dessen weiteren Auslauf bei ruhendem und im Zusammenwirken mit den Wandungen des Ausgußrüssels auch bei bewegtem Transportwagen verhindert.

Der Ersatz des Pipettiervorgangs durch unmittelbaren Ausguß des Probegutes in vorbestimmter Menge aus dem Primärgefäß in das Sekundärgefäß und die damit verbundene Umstellung der Funktion des Diluters in einem entsprechend der abzugebenden Menge gesteuerten Druck-Saug-Lufterzeuger garantiert in Verbindung mit der im Primärgefäß gegebenen, durch das Probegut bestimmten Oberflächenspannung, der Dimensionierung des Ausgußrüssels und der Oberflächenstruktur von dessen Wandungen sowohl eine absolut verschleppungsfreie als auch quantitativ eindeutig bestimmte Probenverteilung.

Das Verschlußstück ist in aller Regel als Einwegteil zu betrachten, wobei fallweise auch dessen Ausstattung mit einem Sensorkontakt dessen Wirksamwerden bei der Fixierung des Primärgefäßes an der Halterung des Transportwagens gegeben ist, vorgesehen ist.

Die Ausbildung des Zwischenträgerstückes — das z. B., wie später beschrieben, eine gegen Druck öffnende Haltezange sein kann — und das in der Regel einheitliche Abmessungen aufweist, ermöglicht sowohl die einfache manuelle Fixierung des Primärgefäßes an der Halterung des Transportwagens als auch den Einsatz gesteuerter Greifer zu deren Führung und Einbringung in die Halterung, so daß in diesem Fall der Einsatz der bekannten, eingangs beschriebenen, Verfahren möglich ist. Da bei nicht in der Halterung eingesetztem Zwischenträgerstück die Luftzuführung zum Gefäß abgesperrt ist, wird das Primärgefäß üblicherweise mit nach unten gerichtetem Verschlußstück und Ausgußrüssel in die Halterung des Transportwagens eingebracht. Halterung, Verschlußstück und Zwischenträger bieten zusammen einen weitgehenden Dimensionierungsfreiraum für die Gestaltung der Primärgefäße.

Desweiteren ist auf eine besonders einfache Weise die Vollständigkeit der Probenverteilung, d. h. der Primärgefäße in die erforderliche Anzahl der Sekundärgefäße ohne Unterbrechung durchführbar.

Eine Abänderung des Verfahrens sieht vor, daß die Luftzuführung in das Primärgefäß unmittelbar — bei Verzicht auf den Zwischenträger — über die Halterung des Transportwagens und das Verschlußstück erfolgt, wobei in diesem Fall der Einsatz des Primärgefäßes in die Halterung des Transportwagens so erfolgt, daß diese nach Einsatz des Primärgefäßes um 180° motorisch oder manuell in Abgabestellung verschwenkt wird.

Diese Abänderung des Verfahrens setzt in der Regel die manuelle Fixierung in der später beschriebenen Halterung voraus.

Die Luftzuführung wird bei nach untem verschwenktem Verschlußstück freigegeben.

Eine zweckmäßige Vorrichtung zur Durchführung des zunächst genannten Verfahrens sieht vor, daß das Zwischenträgerstück als eine gegen Druck öffnende Haltezange ausgebildet ist, deren unteres, d. h. in Richtung des Ausgußrüssels weisendes Teil zum Verschlußstück gerichtet, eine Ausnehmung für das Einsetzen dieses Teiles, eine Durchgangsöffnung für die Durchführung des Ausgußrüssels und eine im wesentlichen senkrecht zur Achse des Primärgefäßes und zum senkrechten Arm der Halterung des Transportwagens gerichtete Luftdurchtrittsöffnung aufweist, wobei das zum senkrechten Arm der Halterung des Transportwagens weisende Ende des unteren Haltezangenteils als gelenkige oder biegsame Nase ausgebildet ist, die in nicht fixierter Stellung durch eine Feder oder ein sonstiges Spannmittel nach oben abgelenkt ist und hierbei die Luftdurchtrittsöffnung und damit die Luftzuführung absperrt, daß das obere Teil der Zange gabelförmig ausgebildet ist und über einen von der Abmessung des Primärgefäßes unabhängigen und einheitlichen, durch Bund begrenzten Bereich in seiner Endstellung schlüssig greift, daß in dieser Endstellung die Nase des Zangenunterteils durch eine vorzugsweise in den senkrechten Arm der Halterung des Transportwagens eingebrachte Ausnehmung oder ein daran angeordnetes Führungsmittel so weit nach unten, d. h. im wesentlichen in eine senkrechte Lage zur Achse des Primärgefäßes gedrückt wird, bis die Luftzuführung durch die Luftdurchtrittsöffnung geöffnet ist, und daß diese entweder in Fortsetzung dieser Richtung aus der Halterung oder durch den senkrechten Arm der Halterung zum Anschluß für den Diluter geführt wird.

Eine besonders sichere Fixierung ist dann gegeben, wenn das Zangenunterteil bei geöffneter Stellung für die Luftdurchtrittsöffnung durch mindestens eine Magnetverbindung in dieser Position, und zwar zusammenwirkend mit einem in dem senkrecht zur Achse des Primärgefäßes gerichteten Teil der Halterung des Transportwagens angeordneten Positionsmarkierungsmittel gehalten wird.

Zum Problem der Abdichtung wird vorgeschlagen, daß die Abdichtung zwischen dem Zangenunterteil einschließlich der die Luftverbindung herstellenden Nase und dem Verschlußstück des Primärgefäßes einerseits und der Abdichtung zum Träger des Transportwagens andererseits durch die zumindest partiell elastische Ausbildung des Verschlußstückes und der Nase gegeben ist.

Es kann ebenfalls vorgesehen werden, daß die Abdichtung zwischen dem Zangenunterteils einschließlich der die Luftverbindung herstellenden Nase und dem Verschlußstück des Primärgefäßes einerseits und die Abdichtung zum Träger des Transportwagens andererseits durch Zwischenfügen von Dichtungsringen zwischen Zangenunterteil und Verschlußstück sowie Nase und der Halterung des Transportwagens gegeben ist.

Zur Kontrolle des Auslaufes, z. B. bei Vorliegen von Verstopfungen, kann vorgesehen werden, daß in Richtung des Ausgußrüssels weisend am Träger des Transportwagens ein bzw. mehrere Träger zur Aufnahme von Mitteln zur optischen Auslaufüberwachung vorgesehen ist bzw. sind.

Für die Durchführung des abgeänderten Verfahrens, das im wesentlichen die manuelle Fixierung der Primärgefäße in der Halterung, bei Verzicht auf ein Zwischenstück, vorsieht, wird eine Vorrichtung vorgeschlagen, die dergestalt ausgebildet ist, daß die Halterung des Transportwagens als Greifer für das Primärgefäß ausgebildet ist, in die das Primärgefäß entweder manuell oder durch programmgesteuerte Mittel einsetzbar ist, daß das in den horizontal geführten Querarm der Halterung des Transportwagens eingreifende Einsatzteil des Verschlußstückes einheitliche Abmessungen aufweist, während das zum Primärgefäß gerichtete Auflageteil des Verschlußstückes in seiner Form jeweils der Öffnung des verwendeten Primärgefäßes angepaßt oder konisch ausgebildet ist, daß über den Boden des Primärgefäßes ein in Richtung der Gefäßachse spannbares, nach innen konisch ausgebildetes Hohlstück greift, und daß dieses Hohlstück an einem achsparallel zum Längsarm der Halterung des Transportwagens verlaufenden, mit einer Längsführung ausgerüsteten Querarm geführt ist, und das Primärgefäß durch eine Feder über das Hohlstück in seiner Achsrichtung gegen das Verschlußstück verspannt ist.

Das beschriebene Verfahren, seine mögliche Abänderung sowie die zur Durchführung vorgesehenen Vorrichtungen werden der Forderung der Aufgabenstellung in vollem Umfang gerecht.

Darüberhinaus sind die Verfahren und Vorrichtungen in weitem Umfang flexibel an beliebige Systeme anpaßbar. Das Verfahren und seine Vorrichtung bieten auch für den allgemeinen Betrieb große Vorteile, da die Gefahr des Verschüttens und des Verdunstens durch das Verschlußstück praktisch ausgeschlossen ist.

Die Erfindung wird durch die beigefügten Zeichnungen beispielsweiser Ausführungen näher erläutert.

Figur 1 zeigt in schematischer Darstellung den Transportablauf zwischen den Primär- und Sekundärgefäßen.

Figur 2 zeigt die Probenidentifikation, d. h. deren Kennzeichnung und die durch einen Rechner gesteuerte Zuordnung der Sekundärgefäße zu jedem Primärgefäß, entsprechend der Aussage einer Lesekarte.

Figur 3 zeigt die Verbindung des Primärgefäßes über ein als Haltezange ausgebildetes Zwischenstück mit der Halterung des Transportwagens in Abgabeposition, d. h. mit nach unten gerichtetem Ausgußrüssel.

Figur 4 zeigt das Haltezangenoberteil.

Figur 5 zeigt das Haltezangenunterteil mit einer hieran ausgebildeten, die Luftzuführung öffnenden und schließenden Nase.

Figur 6 zeigt die Nase in vergrößerter Darstellung mit einer in dieser angeordneten Feder.

Figur 7 zeigt die Verbindung des Primärgefäßes mit einer um 180° durch Schwenkmotor drehbaren, am Transportwagen angeordneten Halterung.

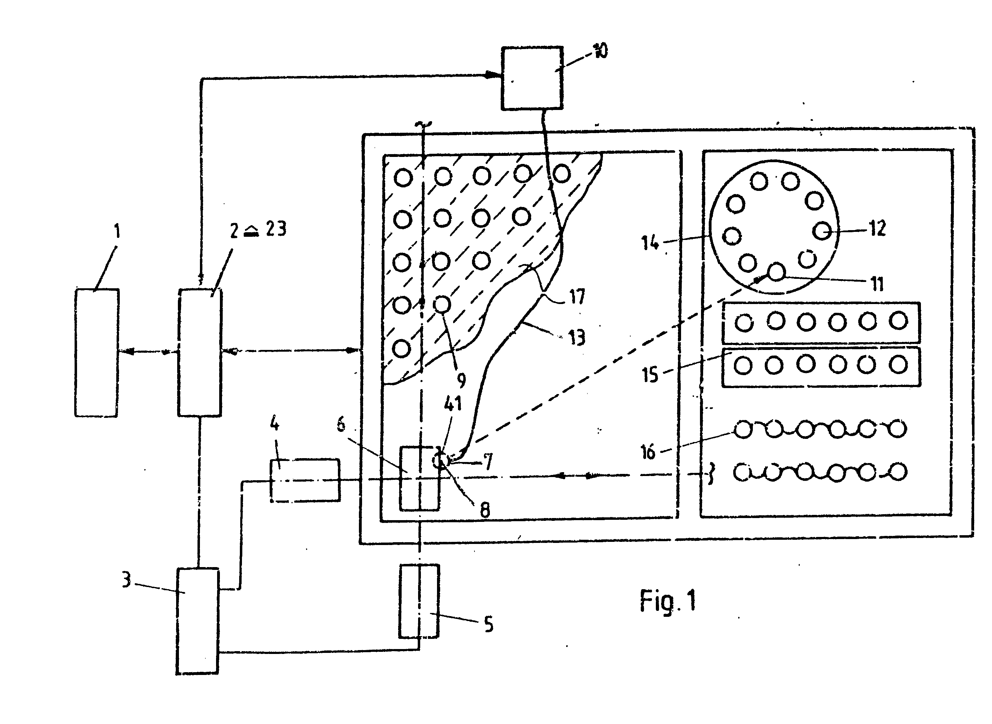

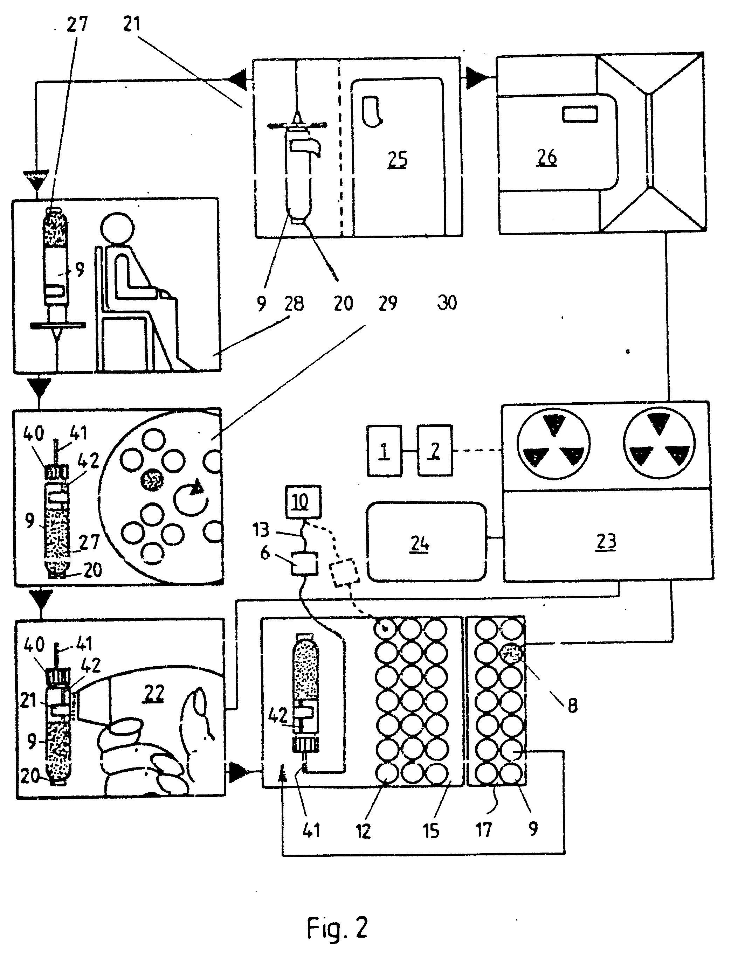

Zu Figur 1 und 2

Der Computer 1 mit zugeordnetem Interface 2 bestimmt die Koordinatensteuerung 3 der beiden Schrittmotore 4 und 5, die die Einstellung des mit einer Halterung 7 für das Primärgefäß 9 ausgerüsteten Transportwagens 6 in der x-y-Ebene bewirken. Diese Einstellung erfolgt bei dem Beispiel zunächst in einer Aufnahmeposition 8 oberhalb eines Primärgefäßes 9, das durch ein Verschlußstück 40 abgeschlossen ist (Figur 2). Der einen Bestandteil dieses Verschlußstückes 40 bildende Ausgußrüssel 41 wird nach oder bei Einbringung in die Halterung 7 des Transportwagens 6 nach unten, zusammen mit dem Primärgefäß 9, manuell oder motorisch gedreht, so daß der Ausgußrüssel 41 in Richtung der Öffnungen der Sekundärgefäße 12 weist. Der Transportwagen 6 fährt anschließend das um 180° gedrehte Sekundärgefäß 9 in Richtung der gestrichelten Pfeillinie in eine oberhalb der Einstellposition des Sekundärgefäßes 12 gegebenen Abgabeposition 11.

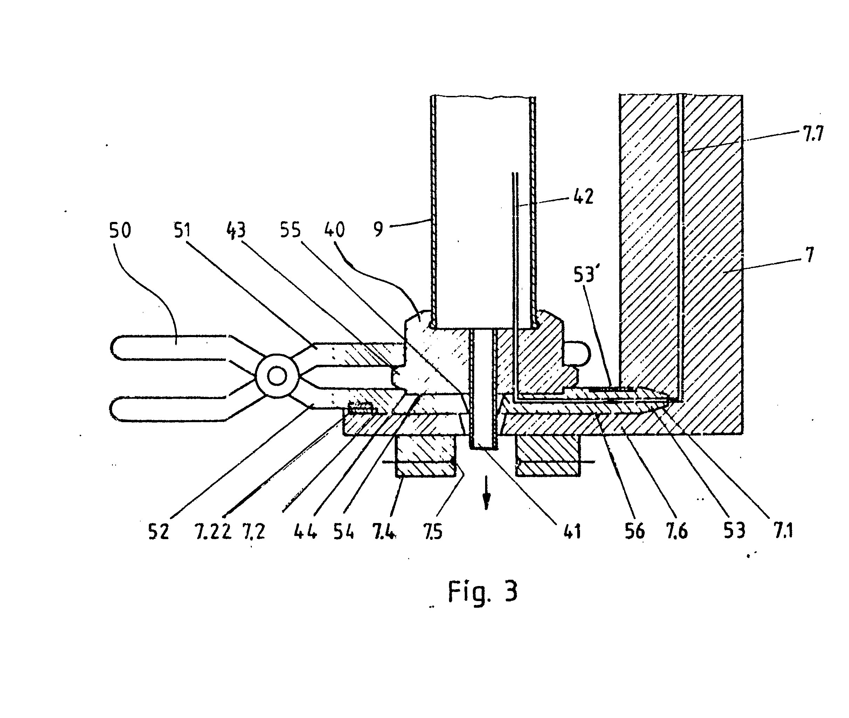

Hier wird bei Öffnung und damit Zuführung von Luft in vorbestimmter Menge und Spannung durch den Diluter 10 über die bis dahin geschlossene Leitung 56 (Figur 3), einen Zwischenträger 50 (Figur 3) und/oder das Verschlußstück 40 sowie ein mit diesem verbundenes Steigrohr 42 in das Primärgefäß 9 freigegeben und damit die Abgabe der Probe 27 in vorbestimmter Menge über den Ausgußrüssel 41 eingeleitet.

Wahlweise können auch Reagenzflüssigkeiten in genau definierten Anteilen und in gleicher Weise der Probe 12 zugegeben werden. Damit ist sicher gestellt, daß die Proben meßfertig, beispielsweise durch die Zugabe einer Reagenzlösung zum Patientenserum, vorbereitet werden können, wobei diese Zugabe ebenfalls automatisch, d. h. vom Rechner gesteuert, erfolgen kann und z. B. Verdünnungsreihen in beliebig vorbestimmter Konzentration hergestellt werden können.

Der Transportwagen 6 ist mit dem Diluter 10 durch einen flexiblen Schlauch 13 verbunden. Die Sekundärgefäße 12 sind vorzugsweise in runden Trägern 14 an deren Peripherie oder in Racks 15 hintereinander in Reihe oder in Ketten 16 angeordnet, während die Primärgefäße 9 in einer auswechselbaren Palette 17 eingebracht sind.

Zu der im wesentlichen durch Figur 2 ausgewiesenen Probenidentifikation ist zu bemerken, daß hier das Interface 2 der besseren Übersicht halber mit dem Rechner 23, der insbesondere auch vergleichende Funktionen übernimmt, koordiniert ist und eine Einheit bildet.

Das mit dem Sensorkontakt 20 ausgerüstete Primärgefäß 9 wird in der Ausweisstation 30 mit einem durch Computer lesbaren Etikett 21 versehen und die Anforderungsmarkierungskarte 25, die die Etikettierung des Primärgefäßes 9 sowie die mit der Probe 27 in einer entsprechenden Anzahl Sekundärgefäße 12 durchzuführenden Untersuchungen ausweist, vorbereitet.

Das so vorbereitete Primärgefäß 9 wird nach Einbringung des Probegutes 27 aus der Patientenstation 28 in die Laborstation 29 verbracht. Dort wird im allgemeinen durch Zentrifugieren der Blutkuchen von dem Serum getrennt, das Probegut 27 zur Untersuchung vorbereitet und das Primärgefäß 9 durch ein Verschlußstück 40, das Träger des Ausgußrüssels 41 und des Steigrohres 42 ist, verschlossen. Das Etikett 21 des Primärgefäßes 9 wird nunmehr durch manuell geführten Lesestift 22 erfaßt und die Etikettaussage in den Rechner 23, der mit einem Bildschirm 24 verbunden ist, eingegeben und im weiteren das Primärgefäß 9 in die Entnahmeposition 8 in der Palette 17 eingestellt.

Über den hier wirksam werdenden Sensorkontakt 20 wird die Entnahmeposition 8 in der Palette 17 in den Rechner 23 gegeben, so daß die Etikettaussage und die Position 8 des Primärgefäßes 9 in der Palette 17 anstehen.

Parallel zu diesen Schritten wird die Anforderungsmarkierungskarte 25 in den Kartenleser 26 eingegeben und die Aussagen dieser Karte ebenfalls durch den Rechner 23 erfaßt. Über den Rechner 23 wird die Entnahme des Probegutes 27 entsprechend der Gefäßetikettierung 21 und der Aussage der Anforderungsmarkierungskarte 25 aus dem in Entnahmeposition 8 anstehenden Primärgefäß 9 nach dessen Drehung um 180° durch den Pipettierwagen 6, der mit dem Diluter 10 verbunden ist, gesteuert, wobei die Teilmengen zur Einzeluntersuchung entsprechend der Aufgabe der Anforderungsmarkierungskarte 25 in die Sekundärgefäße 12 eingebracht werden.

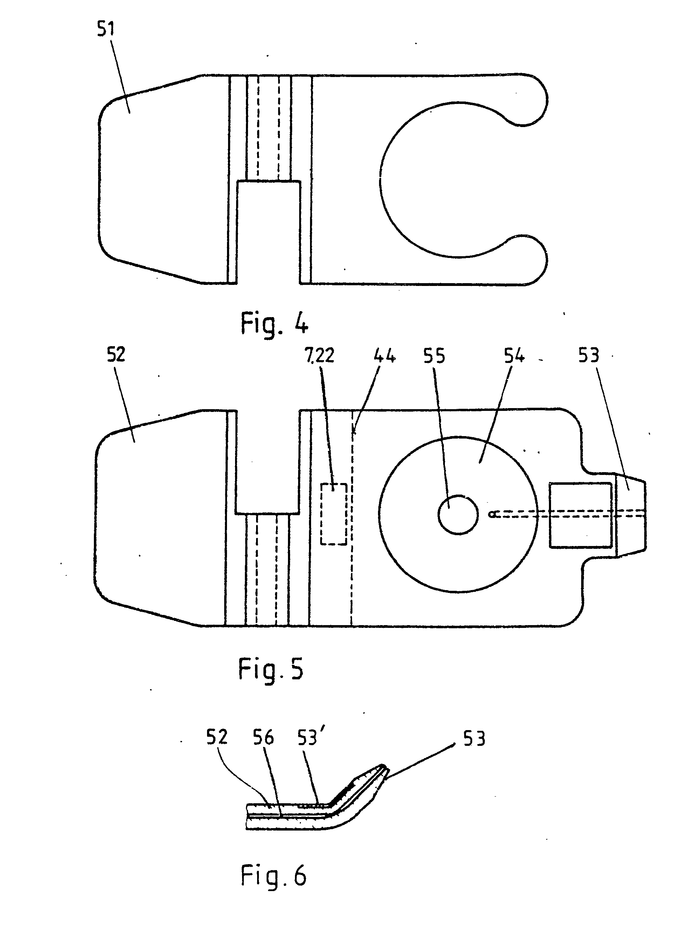

Zu Figur 3 bis 6

Diese Darstellungen zeigen im wesentlichen die Ausbildung des als Haltezange 50 ausgebildeten Zwischenstückes und dessen Anordnung und Verbindung mit der Halterung 7 des Transportwagens 6.

Die Haltezange 50 besteht aus einem Haltezangenoberteil 51 und einem Haltezangenunterteil 52, wobei das Zangenoberteil gabelförmig ausgebildet ist und über den einheitlich durch Bund 43 begrenzten Bereich der Peripherie des Verschlußstückes 40 in seiner Endstellung schlüssig greift. Das Unterteil 52 weist eine Ausnehmung 54 für den Verschlußstückansatz 44 aus und sieht im Zentrum eine Durchgangsöffnung 55 für die Durchführung des Ausgußrüssels 41 vor. Dem Haltezangenunterteil 52 ist, in Richtung der Halterung 7 des Transportwagens 6 weisend, eine in eine Ausnehmung 7.1 einführbare Nase 53 angeschlossen und hat, durch die Nase 53 bis zum Anschlußbereich des Luftsteigrohres 42 führend, eine Luftdurchtrittsöffnung 56.

Bei nicht eingesetzter Haltezange 50 wird deren Nase 53 durch eine in das elastische Material der Nase 53 und des Zangenunterteils 52 eingebrachte Feder 53' so weit nach oben abgebogen, daß die Luftdurchtrittsöffnung 56 abgeschlossen ist, wobei fallsweise ein Gelenkventil vorgesehen werden kann.

Bei Einschub der Nase in die Ausnehmung 7.1 und der Fixierung des Zangenunterteils 52 durch ein an dem Querarm 7.6 ausgebildetes Positionsmarkierungsmittel 7.2, z. B. eine Stufe, wird die Luftdurchtrittsöffnung 56, freigegeben und die Luft tritt dann über die durch Nase 53 und Zangenunterteil 52 führende Luftdurchtrittsöffnung 56 in den durch das Verschlußstück 40 führenden Anschluß für das Luftsteigrohr 42 in das Primärgefäß 9. Die Luftzuführung erfolgt über eine Öffnung 7.7 bzw. deren senkrechten Arm zum nicht gezeichneten Luftanschluß des Diluters 10. Das Zangenunterteil 52 wird in Abgabeposition durch eine am Querarm 7.6 der Halterung 7 angeordneten Magnetverbindung 7.22 gehalten. Die Abgabe erfolgt entsprechend den zu Figur 1 gegebenen Erläuterungen. Position 40 und 51 sind durch beliebige Mittel in ihrer Lage gegen Verdrehung zueinander fixiert.

Darüberhinaus kann es zweckmäßig sein, zusätzlich eine optische Auslaufüberwachung vorzusehen. In diesem Fall empfiehlt sich die Anordnung von Optikträgern 7.4, die zur Aufnahme von entsprechenden Überwachungsmitteln 7.5 ausgebildet sind.

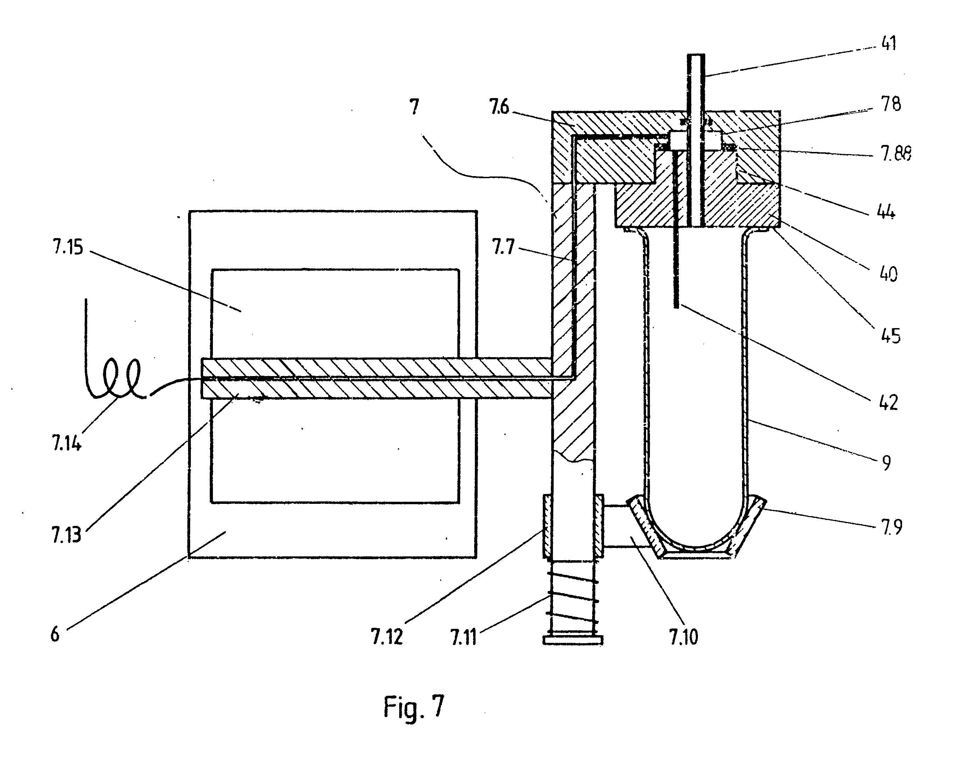

Durch Figur 7 wird eine Lösung ausgewiesen, bei der, unter Verzicht auf den als Haltezange 50 ausgewiesenen Zwischenträger, die Luft unmittelbar über die Halterung 7, deren Querarm 7.6 und deren Luftöffnung 7.7 in die mit einem Anschlag 7.88 für das Einsatzteil 44 des Verschlußstückes 40 ausgerüstete Ausnehmung 7.8 führt. Der Anschlag ermöglicht die Schaffung eines Luftraumes, von dem aus, abgehend von der durch das Verschlußstück 40 geführten Anschlußöffnung für das Steigrohr 42, in das gegen das Auflageteil 45 gerichtete Primärgefäß 9 die Luft eintritt.

Das Primärgefäß 9 wird durch ein innen konisch ausgebildetes, an einem Querarm 7.10 zur Halterung 7 angeordnetes und an diesem über eine Längsführung 7.12 bewegbares Holzstück 7.9 in seinem Bodenbereich umfaßt, wobei eine Feder 7.11 das Primärgefäß 9 über das Hohlstück 7.9 gegen das Auflageteil 45 des Verschlußteiles 40 abdichtend andrückt.

Die Luftöffnung 7.7 kann, wie es in diesem Beispiel vorgesehen ist, über die stationär an der Halterung 7 angeordnete Schwenkmotorwelle 7.13, über eine die Schwenkbewegung aufnehmende Spirale 7.14 und eine weitere Leitung mit dem Diluter 10 verbunden sein. Der um 180° drehende Schwenkmotor 7.15 ist fest mit dem Transportwagen 6 verbunden.

## Ansprüche

1. Verfahren zur Verteilung von Probengut aus Primärgefäßen, insbesondere von Patientenseren, flüssigen Reagenzien oder dergleichen in beliebig ausgebildete, fest angeordnete Sekundärgefäße — vorzugsweise entsprechend den durch eine Steuerprogrammiervorrichtung aufgenommenen Aufzeichnungen der Daten eines Verteilerblattes — bei dem die Sekundärgefäße über einen in der x-y-Ebene durch zwei Schrittmotore bewegbaren Transportwagen für die Primärgefäße, dem ein Diluter zugeordnet ist, nacheinander ansteuerbar sind und das Primärgefäß nach jeder Abgabe oder der Abgabe des für die gesamte Probenserie vorgesehenen Probenguts wieder in seine Ausgangsposition zurückgebracht wird, dadurch gekennzeichnet, daß die Primärgefäße (9) jeweils bei nach oben weisender Öffnung mit einem der Öffnung des Primärgefäßes (9) angepaßten, sonst jedoch einheitlich ausgebildeten Verschlußstück (40) kraft- oder formschlüssig verbunden werden, wobei am Verschlußstück (40) ein Ausgußrüssel (41) angeordnet sowie eine in ein Steigrohr (42) einmündende Luftdurchtrittsöffnung (56) eingebracht ist ; daß anschließend das Verschlußstück (40) in ein mit absperrbarer Luftzuführung ausgerüstetes Zwischenträgerteil (50), in abgesperrter Stellung der Luftzuführung durch die Luftdurchtrittsöffnung (56), eingebracht wird ; daß in der Folge das mit dem Zwischenträgerstück (50) versehene Primärgefäß (9) mit seiner Öffnung senkrecht nach unten weisend gedreht in der Halterung (7) des Transportwagens (6) — bei damit verbundener selbsttätiger Öffnung der Luftzuführung durch die Luftdurchtrittsöffnung (56) — durch den Zwischenträger (50) fixiert wird ; daß für die Abgabe des Probegutes (27) durch den Diluter (10) Luft in einer solchen Menge und mit solchem Druck über eine Leitung (7.7), den Zwischenträger (50) und das Steigrohr (42) in das Primärgefäß (9) eingegeben wird, bis ein entsprechend vorbestimmtes Quantum des Probegutes (27) aus diesem verdrängt ist ; daß mit Abgabe der voreingestellten Probemenge in ein Sekundärgefäß (12) durch den Diluter (10) aus dem Primärgefäß (9) Luft insoweit evakuiert wird, bis die Oberflächenspannung des Probegutes (27) dessen weiteren Auslauf bei ruhendem und im Zusammenwirken mit den Wandungen des Ausgußrüssels (41) auch bei bewegtem Transportwagen (6) verhindert.

2. Abänderung des Verfahrens nach Anspruch 1, dadurch gekennzeichnet, daß die Luftzuführung in das Primärgefäß (9) unmittelbar — bei Verzicht auf den Zwischenträger (50) — über die Halterung (7) des Transportwagens (6) und das Verschlußstück (40) erfolgt, wobei in diesem Fall der Einsatz des Primärgefäßes (9) in die Halterung (7) des Transportwagens (6) so erfolgt, daß diese nach Einsatz des Primärgefäßes (9) um 180° motorisch oder manuell in Abgabestellung verschwenkt wird.

3. Vorrichtung zur Durchführung des Verfahrens nach Anspruch 1 zur Verteilung von Probengut aus Primärgefäßen, insbesondere von Patientenseren, flüssigen Reagenzien oder dergleichen in beliebig ausgebildete, fest angeordnete Sekundärgefäße — vorzugsweise entsprechend den durch eine Steuerprogrammiervorrichtung aufgenommenen Aufzeichnungen der Daten eines Verteilerblattes — bei dem die Sekundärgefäße über einen in der x-y-Ebene durch zwei Schrittmotore bewegbaren Transportwagen für die Primärgefäße, dem ein Diluter zugeordnet ist, nacheinander ansteuerbar sind und das Primärgefäß nach jeder Abgabe oder der Abgabe des für die gesamte Probenserie vorgesehenen Probenguts wieder in seine Ausgangsposition zurückgebracht wird, dadurch gekennzeichnet, daß ein Zwischenträgerstück als eine gegen Druck öffnende Haltezange (50) ausgebildet ist, deren unteres, d. h. in Richtung eines Ausgußrüssels (41) weisendes Teil (52) zu einem Verschlußstück (40) gerichtet, eine Ausnehmung (54) für das Einsetzen dieses Teiles, eine Durchgangsöffnung (55) für die Durchführung des Ausgußrüssels (41) und eine im wesentlich senkrecht zur Achse eines Primärgefäßes (9) und zum senkrechten Arm einer Halterung (7) des Transportwagens (6) gerichtete Luftdurchtrittsöffnung (56) aufweist, wobei das zum senkrechten Arm der Halterung (7) des Transportwagens (6) weisende Ende des unteren Haltezangenteiles (52) als gelenkige oder biegsame Nase (53) ausgebildet ist, die in nicht fixierter Stellung durch eine Feder (53') oder ein sonstiges Spannmittel nach oben abgelenkt ist und hierbei eine Luftdurchtrittsöffnung (56) und damit die Luftzuführung absperrt ; daß das obere Teil der Zange (51) gabelförmig ausgebildet ist und über einen von der Abmessung des Primärgefäßes unabhängigen und einheitlichen, durch Bund (43) begrenzten Bereich in seiner Endstellung schlüssig greift ; daß in dieser Endstellung die Nase (53) des Zangenunterteils (52) durch eine vorzugsweise in den senkrechten Arm der Halterung (7) des Transportwagens (6) eingebrachte Ausnehmung oder ein daran angeordnetes Führungsmittel (7) so weit nach unten, d. h. im wesentlichen in eine senkrechte Lage zur Achse des Primärgefäßes (9) gedrückt wird, bis die Luftzuführung durch die Luftdurchtrittsöffnung (56) geöffnet ist ; und daß diese entweder in Fortsetzung dieser Richtung aus der Halterung (7) oder durch den senkrechten Arm der Halterung (7) zum Anschluß für einen Diluter (10) geführt wird.

4. Vorrichtung nach Anspruch 3, dadurch gekennzeichnet, daß das Zangenunterteil (52) bei geöffneter Stellung für die Luftdurchtrittsöffnung (56) durch mindestens eine Magnetverbindung (7.22) in dieser Position, und zwar zusammenwirkend mit einem in dem senkrecht zur Achse des Primärgefäßes (9) gerichteten Teil der Halterung (7) des Transportwagens (6) angeordneten Positionsmarkierungsmittel (7.2) gehalten wird.

5. Vorrichtung nach Anspruch 3 und 4, dadurch gekennzeichnet, daß die Abdichtung zwischen dem Zangenunterteil (52) einschließlich der die Luftverbindung herstellenden Nase (53) und dem Verschlußstück (40) des Primärgefäßes (9) einerseits und der Abdichtung zum Träger (7) des Transportwagens (6) andererseits durch die zumindest partiell elastische Ausbildung des Verschlußstückes (40) und der Nase (53) gegeben ist.

6. Vorrichtung nach Anspruch 3 und 4, dadurch gekennzeichnet, daß die Abdichtung zwischen dem Zangenunterteil (52) einschließlich der die Luftverbindung herstellenden Nase (53) und dem Verschlußstück (40) des Primärgefäßes (9) einerseits und die Abdichtung zum Träger (7) des Transportwagens (6) andererseits durch Zwischenfügen von Dichtungsringen zwischen Zangenunterteil (52) und Verschlußstück (40) sowie Nase (53) und der Halterung (7) des Transportwagens (6) gegeben ist.

7. Vorrichtung nach Anspruch 3, dadurch gekennzeichnet, daß in Richtung des Ausgußrüssels (41) weisend am Träger (7) des Transportwagens (6) ein bzw. mehrere Träger (7.4) zur Aufnahme von Mitteln zur optischen Auslaufüberwachung (7.5) vorgesehen ist bzw. sind.

8. Vorrichtung zur Durchführung des durch Anspruch 2 abgeänderten Verfahrens nach Anspruch 1 zur Verteilung von Probengut aus Primärgefäßen, insbesondere von Patientenseren, flüssigen Reagenzien oder dergleichen in beliebig ausgebildete, fest angeordnete Sekundärgefäße — vorzugsweise entsprechend den durch eine Steuerprogrammiervorrichtung aufgenommenen Aufzeichnungen der Daten eines Verteilerblattes — bei dem die Sekundärgefäße über einen in der x-y-Ebene durch zwei Schrittmotore bewegbaren Transportwagen für die Primärgefäße, dem ein Diluter zugeordnet ist, nacheinander ansteuerbar sind und das Primärgefäß nach jeder Abgabe oder der Abgabe des für die gesamte Probenserie vorgesehenen Probenguts wieder in seine Ausgangsposition zurückgebracht wird, dadurch gekennzeichnet, daß eine Halterung (7) eines Transportwagens (6) als Greifer für ein Primärgefäß (9) ausgebildet ist, in die das Primärgefäß (9) entweder manuell oder durch programmgesteuerte Mittel einsetzbar ist ; daß ein in den horizontal geführten Querarm (7.6) der Halterung (7) des Transportwagens (6) eingreifendes Einsatzteil (44) eines Verschlußstückes (40) einheitliche Abmessungen aufweist, während ein zum Primärgefäß (9) gerichtetes Auflageteil (45) eines Verschlußstückes (40) in seiner Form jeweils der Öffnung des verwendeten Primärgefäßes (9) angepaßt oder konisch ausgebildet ist ; daß über den Boden des Primärgefäßes (9) ein in Richtung der Gefäßachse spannbares, nach innen konisch ausgebildetes Hohlstück (7.9) greift ; und daß dieses Hohlstück (7.9) an einem achsparallel zum Längsarm der Halterung (7) des Transportwagens (6) verlaufenden, mit einer Längsführung (7.12) ausgerüsteten Querarm (7.10) geführt ist, und das Primärgefäß (9) durch eine Feder (7.11) über das Hohlstück (7.9) in seiner Achsrichtung gegen das Verschlußstück (40) verspannt ist.

**Claims**

1. Method of distributing sample material from primary vessels, particularly patients' sera, liquid reagents or the like, into fixedly mounted secondary vessels of any desired construction — preferably in accordance with the recording of data from a distribution sheet recorded by a control programming apparatus — in which the secondary vessels can be controlled one after another via a transporting carriage for the primary vessels which is movable in the x-y plane by means of two stepping motors and which is associated with a diluter, and after each sample has been delivered or all the sample material for the entire series of samples has been delivered the primary vessel is returned to its initial position, characterised in that the primary vessels (9) each with their opening facing upwards are frictionally or tensionally connected to a closure member (40) which is adapted to the opening of the primary vessel (9) but is otherwise of uniform construction, whilst an outflow tube (41) is mounted on the closure member (40) and an air flow aperture (56) opening into a feedpipe (42) is provided ; adjacent thereto, the closure member (40) is inserted into an intermediate carrier member (50) fitted with sealable air supply means, in the sealed position of the air supply through the air flow aperture (56) ; next, the primary vessel (9) provided with the intermediate carrier member (50) is fixed by the intermediate carrier (50) with its opening facing vertically downwards, this primary vessel (9) being turned in the clamp (7) of the transporting carriage (6) — whilst consequently the air supply is automatically open through the air flow aperture (56) ; for the delivery of the sample material (27) through the diluter (10) air is introduced into the primary vessel (9) through a conduit (7.7), the intermediate carrier (50) and the feedpipe (42) in a quantity and at a pressure such that a predetermined quantity of sample material (27) is displaced from the primary vessel ; when the pre-set quantity of sample is delivered into a secondary vessel (12) through the diluter (10), air is evacuated from the primary vessel (9) until the surface tension of the sample material (27) prevents it from running any further when the transporting carriage (6) is stationary and even, in conjunction with the walls of the outflow tube (41), when the transporting carriage is moving.

2. Modification of the method as claimed in claim 1, characterised in that the air supply to the primary vessel (9) is effected directly — without using the intermediate carrier (50) — via the clamp (7) of the transporting carriage (6) and the closure member (40), whilst in this case the primary vessel (9) is inserted into the clamp (7) of the transporting carriage (6) in such a way that, after the primary vessel (9) has been inserted, it is pivoted through 180° manually or by motor into the delivery position.

3. Apparatus for carrying out the method as claimed in claim 1 for distributing sample material from primary vessels, particularly patients' sera, liquid reagents or the like, into fixedly mounted secondary vessels of any desired construction — preferably in accordance with the recording of data from a distribution sheet recorded by a control programming apparatus — in which the secondary vessels can be controlled one after another via a transporting carriage for the primary vessels which is movable in the x-y plane by means of two stepping motors and which is associated with a diluter, and after each sample has been delivered or all the sample material for the entire series of samples has been delivered the primary vessel is returned to its initial position, characterised in that an intermediate carrier member is constructed as a pair of tongs (50) opening counter to pressure, the lower part (52) of which, i. e. the part pointing in the direction of an outflow tube (41), directed towards a closure member (40), comprises a recess (54) for the insertion of this part, a through-opening (55) for the passage of the outflow tube (41) and an air flow aperture (56) directed substantially at right angles to the axis of a primary vessel (9) and to the perpendicular arm of a clamp (7) of the transporting carriage (6), whilst the end of the lower part (52) of the tongs pointing towards the perpendicular arm of the clamp (7) of the transporting carriage (6) is constructed as an articulated or flexible spout (53) which is articulated at the top, in a non-fixed position, by a spring (53') or other tensioning means and thereby blocks off an air flow aperture (56) and hence the air supply ; the upper part of the tongs (51) is of forked construction and engages positively in its end position via a uniform area, defined by a collar (43), which is independent of the dimensions of the primary vessel ; in this end position, the spout (53) of the lower part (52) of the tongs is pressed downwards, i. e. substantially into a position at right angles to the axis of the primary vessel (9), through a recess preferably provided in the perpendicular arm of the clamp (7) of the transporting carriage (6) or guide means (7) provide thereon, until the air supply through the air flow aperture (56) is opened up ; and this is conveyed either in a continuation of this direction out of the clamp (7) or through the perpendicular arm of the clamp (7) to the connection for a diluter (10).

4. Apparatus as claimed in claim 3, characterised in that, in the open position for the air flow aperture (56), the lower part (52) of the tongs is held in this position by at least one magnetic connection (7, 22), and indeed is held in this position in cooperation with position marking means (7.2) arranged in the part of the clamp (7) of the transporting carriage (6) which is at right angles to the axis of the primary vessel (9).

5. Apparatus as claimed in claims 3 and 4, characterised in that the seal between the lower part (52) of the tongs, including the spout (53) which produces the air connection, and the closure member (40) of the primary vessel (9) on the one hand and the seal with the carrier (7) of the transporting carriage (6) on the other hand is produced by the at least partially elastic construction of the closure member (40) and the spout (53).

6. Apparatus as claimed in claims 3 and 4, characterised in that the seal between the lower part (52) of the tongs, including the spout (53) which produces the air connection, and the closure member (40) of the primary vessel (9) on the one hand and the seal with the carrier (7) of the transporting carriage (6) on the other hand is produced by the intercalation of gaskets between the lower part (52) of the tongs and the closure member (40) and the spout (53) and the clamp (7) of the transporting carriage (6).

7. Apparatus as claimed in claim 3, characterised in that one or more carriers (7.4) for receiving means for optically monitoring (7.5) the outflow is or are provided on the carrier (7) of the transporting carriage (6), pointing in the direction of the outflow tube (41).

8. Apparatus for carrying out the process as claimed in claim 1, modified by claim 2, for distributing sample material from primary vessels, particularly patients' sera, liquid reagents or the like, into fixedly mounted secondary vessels of any desired construction — preferably in accordance with the recording of data from a distribution sheet recorded by a control programming apparatus — in which the secondary vessels can be controlled one after another via a transporting carriage for the primary vessels which is movable in the x-y plane by means of two stepping motors and which is associated with a diluter, and after each sample has been delivered or all the sample material for the entire series of samples has been delivered the primary vessel is returned to its initial position, characterised in that a clamp (7) of a transporting carriage (6) is constructed as a gripper for a primary vessel (9) into which the primary vessel (9) can be inserted either manually or by programmed means ; an insert (44) of a closure member (40), engaging in the horizontally guided transverse arm (7.6) of the clamp (7) of the transporting carriage (6) has uniform dimensions, whilst a support piece (45) of a closure member (40), directed towards the primary vessel (9), is adapted in its shape to the opening of the primary vessel (9) used or is of conical construction ; over the base of the primary vessel (9) there is mounted a hollow member (7.9), tapering conically inwards, which can be tensioned in the direction of the axis of the vessel ; and this hollow member (7.9) is guided on a transverse arm (7.10) which is fitted with a longitudinal guide (7.12) and extends axially parallel to the longitudinal arm of the clamp (7) of the transporting carriage (6), and the primary vessel (9) is braced against the closure member (40) by a spring (7.11) via the hollow member (7.9) in its axial direction.

**Revendications**

1. Procédé de distribution d'échantillons à partir de récipients primaires, en particulier de sérums de patients, de réactifs liquides ou analogues, dans des récipients secondaires disposés de façon fixe et de constitution quelconque, de préférence en fonction des indications des données d'une feuille de distribution lues par un dispositif de programme de commande, selon lequel les récipients secondaires peuvent être déplacés les uns après les autres au-dessus d'un chariot transporteur destiné aux récipients primaires et pouvant être déplacé dans le plan x-y par deux moteurs pas à pas, et auquel est associé un dilueur, et selon lequel le récipient primaire est ramené à sa position de départ après chaque prélèvement ou après le prélèvement de l'échantillon prévu pour l'ensemble de la série d'échantillons, caractérisé en ce que les récipients primaires (9) dont l'ouverture est tournée vers le haut sont reliés par ajustage serré ou concordance de formes à un élément de fermeture (40) adapté à l'ouverture du récipient primaire (9) mais constitué cependant sous une forme uniforme, une goulotte de coulée (41) et une ouverture de passage de l'air (56) débouchant dans un tube montant (42) étant prévues dans l'élément de fermeture (40), en ce qu'ensuite l'élément de fermeture (40) est disposé, en position fermée de l'amenée d'air par l'ouverture de passage d'air (56) dans un support intermédiaire (50) équipé d'une amenée d'air pouvant être fermée, en ce qu'ensuite le récipient primaire (9) muni du support intermédiaire (50) est fixé au moyen dudit support intermédiaire (50) alors que son ouverture est tournée de façon à être orientée verticalement vers le bas dans la monture (7) du chariot transporteur (6) — avec ouverture automatique de l'amenée d'air par l'ouverture de passage d'air (56) —, en ce qu'en vue du prélèvement de l'échantillon (27), de l'air est envoyé par le dilueur (10) en passant par une conduite (7.7), le support intermédiaire (50) et le tube de montée (42) dans le récipient primaire, selon une quantité et une pression telles qu'une quantité prédéterminée et correspondante de l'échantillon (27) soit refoulée dudit récipient primaire, en ce qu'au moment de l'envoi de la quantité préalablement établie de l'échantillon dans un récipient secondaire (12) de l'air soit retiré par le dilueur (10) du récipient primaire (9) jusqu'à ce que la tension de surface de l'échantillon (27) arrête la poursuite de sa sortie tant lors de l'immobilité du chariot (6) que même lorsque le chariot transporteur (6) se déplace par coopération avec les parois de la goulotte de coulée (41).

2. Variante du procédé selon la revendication 1, caractérisée en ce que l'amenée d'air dans le récipient primaire (9) est réalisée directement — en éliminant le support intermédiaire (50) — par l'intermédiaire de la monture (7) du chariot transporteur (6) et par l'élément de fermeture (40), l'insertion du récipient primaire (9) dans la monture (7) du chariot transporteur (6) s'effectuant dans ce cas de manière telle que ladite monture, après insertion du récipient primaire (9), soit pivotée mécaniquement ou manuellement sur 180° vers sa position de prélèvement.

3. Dispositif pour la mise en œuvre du procédé selon la revendication 1, pour la distribution d'échantillons à partir de récipients primaires, en particulier de sérums de patients, de réactifs liquides ou analogues, dans des récipients secondaires disposés de façon fixe et de constitution quelconque, de préférence en fonction des indications des données d'une feuille de distribution lues par un dispositif de programme de commande, selon lequel les récipients secondaires peuvent être déplacés les uns après les autres au-dessus d'un chariot transporteur destiné aux récipients primaires et pouvant être déplacé dans le plan x-y par deux moteurs pas à pas, et auquel est associé un dilueur, et selon lequel le récipient primaire est ramené à sa position de départ après chaque prélèvement ou après le prélèvement de l'échantillon prévu pour l'ensemble de la série d'échantillons, caractérisé en ce qu'un élément de support intermédiaire est constitué sous forme d'une pince de retenue (50) s'ouvrant par pression, dont la partie inférieure (52), c'est-à-dire tournée en direction de la goulotte de coulée (40), est dirigée vers un élément de fermeture (40), comprend une ouverture de passage (55) pour le passage de la goulotte de coulée (41) et une ouverture de passage d'air (56) sensiblement perpendiculaire à l'axe d'un récipient primaire (9) et dirigée en direction du bras vertical d'une monture (7) du chariot transporteur (6), l'extrémité de la partie inférieure (52) de la pince de retenue qui est tournée en direction du bras vertical de la monture (7) du chariot transporteur (6) étant constituée sous forme d'un nez (53) articulé ou flexible qui, en position non fixée, est dévié vers le haut par un ressort (53') ou un moyen de serrage quelconque et ferme alors une ouverture de passage d'air (56) et de ce fait l'amenée d'air, en ce que la partie supérieure (51) de la pince est constituée sous forme d'une fourche et effectue une saisie ferme dans sa position terminale d'une région limitée par une bride (43), ne dépendant pas des dimensions du récipient primaire et uniforme, en ce que dans cette position terminale, le nez (53) de la partie inférieure (52) de la pince est replié vers le bas, c'est-à-dire sensiblement dans une position perpendiculaire à l'axe du récipient primaire (9) dans un évidement ou un moyen de guidage (71) disposé en cet endroit et monté de préférence dans le bras vertical de la monture (7) du chariot transporteur (6) jusqu'à ce que l'ouverture d'air soit ouverte par l'ouverture de passage d'air (56), et en ce que cette dernière est guidée pour être raccordée à un dilueur (10) soit dans le prolongement de cette direction en partant de la monture (7) soit en passant par le bras vertical de la monture (7).

4. Dispositif selon la revendication 3, caractérisé en ce que la partie inférieure (52) de la pince est maintenue en position ouverte pour l'ouverture de passage d'air (56) par au moins une liaison magnétique (7.22) dans cette position, et ceci en coopération avec un moyen de marquage de position (7.2) disposé dans la partie de la monture (7) du chariot transporteur (6) qui est perpendiculaire à l'axe du récipient primaire (9).

5. Dispositif selon les revendications 3 et 4, caractérisé en ce que l'étanchéité entre la partie inférieure (52) de la pince, y compris le nez (53) réalisant la liaison de l'air et l'élément de fermeture (40) du récipient primaire (9) d'une part et la garniture d'étanchéité vis-à-vis du support (7) du chariot transporteur (6) d'autre part est réalisée par la constitution au moins partiellement élastique de l'élément de fermeture (40) et du nez (53).

6. Dispositif selon les revendications 3 et 4, caractérisé en ce que l'étanchéité entre la partie inférieure (52) de la pince, y compris le nez (53) réalisant la liaison de l'air et l'élément de fermeture (40) du récipient primaire (9) d'une part et la garniture d'étanchéité vis-à-vis du support (7) du chariot transporteur (6) d'autre part est réalisée par l'insertion de bagues d'étanchéité entre la partie inférieure (52) de la pince et l'élément de fermeture (40) ainsi qu'entre le nez (53) et la monture (7) du chariot transporteur (6).

7. Dispositif selon la revendication 5, caractérisé en ce que on prévoit un ou plusieurs supports (7.4) destinés à supporter des moyens de surveillance optique de sortie (7.5) orientés en direction de la goulotte de coulée (41) sur le support (7) du chariot transporteur (6).

8. Dispositif pour la mise en œuvre du procédé de la revendication 1 modifié selon la revendication 2, pour la distribution d'échantillons à partir de récipients primaires, en particulier de sérums de patients, de réactifs liquides ou analogues, dans des récipients secondaires disposés de façon fixe et de constitution quelconque, de préférence en fonction des indications des données d'une feuille de distribution lues par un dispositif de programme de commande, selon lequel les récipients secondaires peuvent être déplacés les uns après les autres au-dessus d'un chariot transporteur destiné aux récipients primaires et pouvant être déplacé dans le plan x-y par deux moteurs pas à pas, et auquel est associé un dilueur, et selon lequel le récipient primaire est ramené à sa position de départ après chaque prélèvement ou après le prélèvement de l'échantillon prévu pour l'ensemble de la série d'échantillons, caractérisé en ce qu'une monture (7) d'un chariot transporteur (6) est constituée sous forme d'une griffe de saisie pour un récipient primaire (9) dans laquelle monture le récipient primaire (9) est disposé soit manuellement soit par des moyens commandés par un programme, en ce qu'un élément d'insertion (44) d'un élément de fermeture (40) pénétrant dans le bras transversal (7.6) guidé horizontalement de la monture (7) du chariot transporteur (6) présente des dimensions uniformes, alors qu'une partie d'appui (45) d'un élément de fermeture (40) dirigée en direction du récipient primaire (9) a une forme qui est adaptée à chaque fois à l'ouverture du récipient primaire (9) utilisé, ou est de forme conique, en ce qu'une pièce creuse (7.9) de forme conique vers l'intérieur et pouvant être mise en tension en direction de l'axe du récipient effectue un mouvement de saisie par-dessus le fond du récipient primaire (9), et en ce que cette pièce creuse (7.9) est guidée sur un bras transversal (7.10) disposé parallèlement à l'axe du bras longitudinal de la monture (7) du chariot transporteur (6) et est équipé d'un guide longitudinal (7.12) et en ce que le récipient primaire (9) est mis en tension en direction de son axe contre l'élément de fermeture (40) au moyen d'un ressort (7.11) et par l'intermédiaire de la pièce creuse (7.9).

Fig. 1

1

Fig. 2

Fig. 3

Fig. 4

Fig. 5

Fig. 6

4

Fig. 7

0 048 452